# EUROPEAN PATENT SPECIFICATION

(11) **EP 1 569 820 B1**
(45) Date of publication and mention of the grant of the patent: **29.08.2007**
(21) Application number: 03796939.1
(22) Date of filing: 10.12.2003
(51) Int. Cl.: B60R 5/04, B60R 7/02

(54) **MULTI TRAY CARGO SYSTEM**
FRACHTAUFBEWAHRUNGSSYSTEM MIT MEHREREN KAMMERN
SYSTEME DE PORTE-BAGAGES A PLATEAUX MULTIPLES

(30) Priority: 10.12.2002 US 432369 P
(43) Date of publication of application: 07.09.2005
(73) Proprietor: Johnson Controls Technology Company, Holland, MI 49423 (US)
(72) Inventor: FITZPATRICK, Robert, C., Holland, MI 49423 (US)
(74) Representative: Marshall, Caroline
(86) International application number: PCT/US2003/039388
(87) International publication number: WO 2004/052686

(56) References cited:
- EP-A- 0 329 620
- EP-A- 1 247 693
- DE-A- 4 110 089
- GB-A- 1 331 808

## Description

### FIELD OF THE INVENTION

The present inventions relate to a system for storing cargo within a vehicle. The present inventions more specifically relate to a system for storing cargo that is configurable, reconfigurable, storable, and the like.

### BACKGROUND OF THE INVENTION

It is known to provide for cargo storage systems or organizers that may be used for storing or organizing cargo within a vehicle. Such known cargo storage systems, however, do not realize certain advantageous features (and/or combinations of features). For example, such known cargo storage systems are not reconfigurable in a variety of use (and non-use) positions and locations. Also, such known cargo systems are not capable of being stowed within the vehicle without reducing the usable space within the vehicle passenger compartment.

Accordingly, it would be advantageous to provide a multi tray cargo system. It would also be advantageous to provide a cargo system that is configurable, reconfigurable, stowable, and the like. It would be desirable to provide for a cargo system having one or more of these or other advantageous features. To provide an inexpensive, reliable, and widely adaptable cargo system that avoids the above-referenced and other problems would represent a significant advance in the art.

EP 1 247 693 discloses a generic cargo storage system that is configurable and reconfigurable. The system includes a plurality of spaced apart support members.

Figures 15 and 16 of EP 1 247 693 indicate that each end of each support member is slidably retained in an elongate track. One disadvantage of this arrangement in that it is different for an operator to remove the respective ends from the corresponding track thereby hindering reconfiguration of the system.

### SUMMARY OF THE INVENTION

According to a first aspect of the invention there is provided a collapsible cargo system for a vehicle according to Claim 1.

Preferably the cargo system includes further features as defined in dependent Claims 2 to 6.

### DESCRIPTION OF THE FIGURES

FIGURE 1 is a fragmentary perspective view of a stowed cargo system according to a preferred embodiment.

FIGURE 2 is a fragmentary perspective view of the stowed cargo system of FIGURE 1.

FIGURE 3 is a fragmentary perspective view of the cargo system of FIGURES 1 and 2 in a first use or deployed position.

FIGURE 4 is a fragmentary perspective view of the cargo system of FIGURES 1 and 2 in a second (or alternative) use or deployed position.

FIGURE 5 is a fragmentary perspective view of the cargo system of FIGURES 1 and 2 in a third (or alternative) use or deployed position.

FIGURE 6 is a perspective view of a panel for the cargo system according to a preferred embodiment.

FIGURE 7 is a side sectional view of the panel of FIGURE 6 taken along the lines A-A.

FIGURE 8 is a side sectional view of the panel of FIGURE 6 taken along the lines B-B.

FIGURE 9 is a fragmentary perspective view of the panel of FIGURE 6 having a main batten (with an interface member) and a secondary batten according to a preferred embodiment.

FIGURE 10 is a fragmentary top plan schematic view of the panel of FIGURE 9.

FIGURE 11 is a fragmentary perspective schematic view of the cargo area and the interface apertures according to a preferred embodiment.

FIGURE 12 is a top plan view of an interface bezel or slot member according to a preferred embodiment.

FIGURE 13 is a side sectional view of the interface bezel or slot member of FIGURE 12 taken along line 13-13.

FIGURE 14 is a fragmentary perspective view of the passenger and cargo compartment shown without the cargo panel and with the seats removed (or folded down).

FIGURE 15 is a perspective view of a storage support or frame of FIGURE 14 according to a preferred embodiment and shown in a stowed position.

FIGURE 16 is a side view of the storage support or frame of FIGURE 15 shown in a deployed position.

FIGURE 17 is a perspective view of the panel rolled up and being stowed in a space defined by the trim panel.

### DETAILED DESCRIPTION OF PREFERRED AND OTHER EXEMPLARY EMBODIMENTS

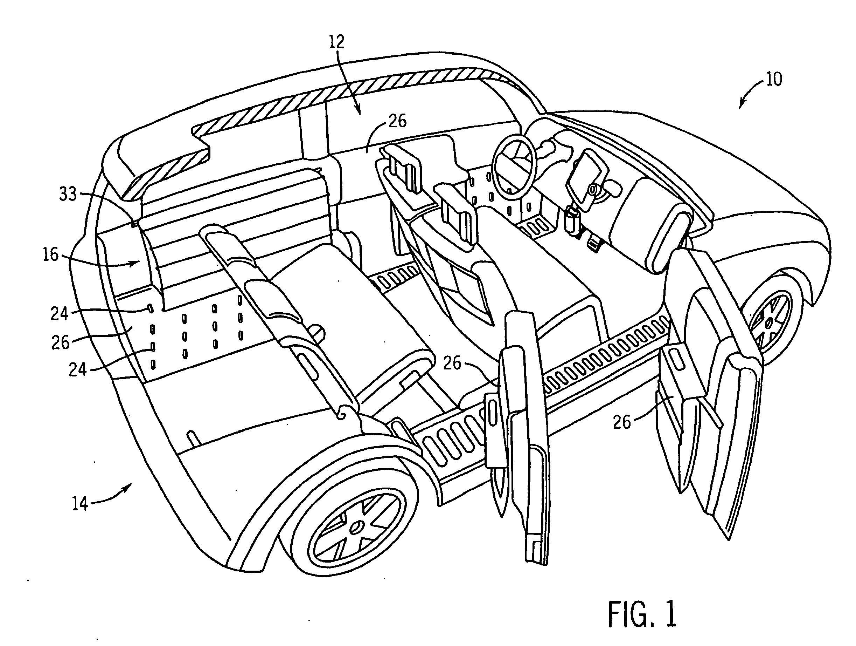

FIGURE 1 is a fragmentary perspective view of a vehicle 10 including a passenger compartment 12 and a cargo area 14 with a cargo system 16 according to a preferred embodiment.

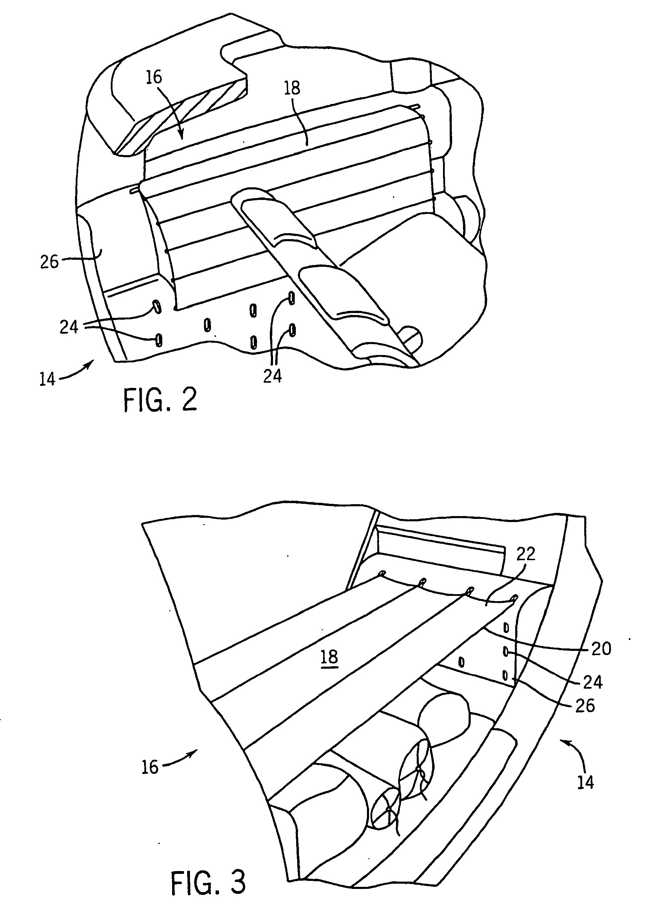

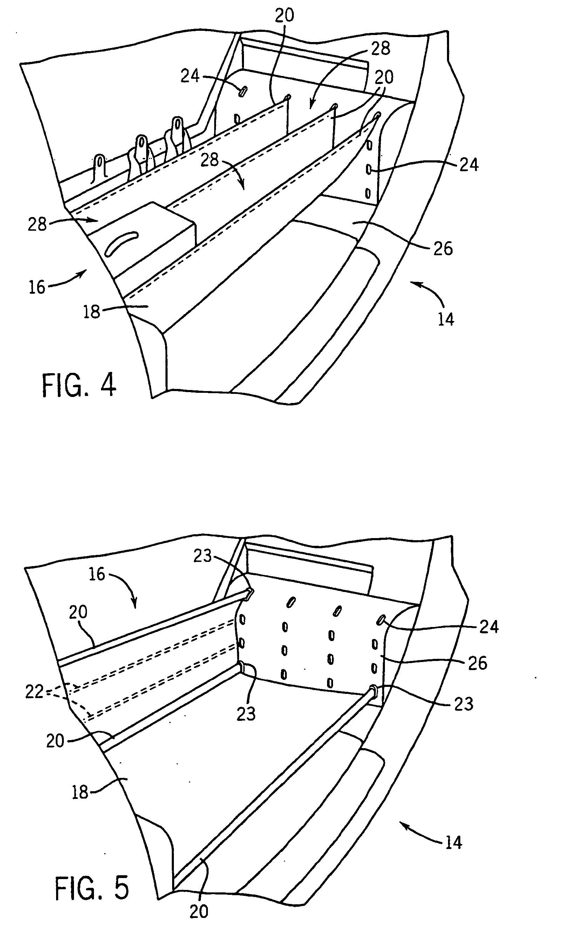

Cargo system 16 is movable (configurable, reconfigurable, etc.) between a use or deployed position (illustrated in FIGURES 1 and 2) and a stored or secondary or stowed position (illustrated in FIGURES 3, 4, and 5).

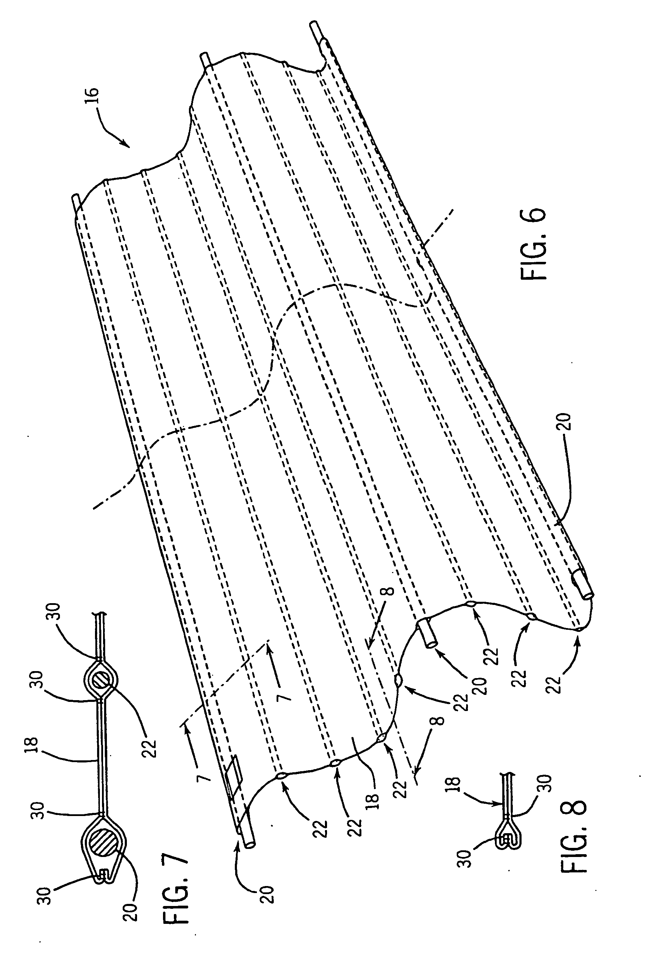

Cargo system 16 includes a panel 18, a plurality of structural members (shown as main battens 20 and support battens 22). According to an exemplary embodiment, the support structures are configured to be replaceable and/or removable (e.g., to facilitate washing panel 18). According to a preferred embodiment, panel 18 is formed from a flexible material (e.g., vinyl, cloth, fabric, leather, or the like). As such, cargo system 16 is configured to flex (e.g., bunch, roll up, be foldable, etc.) in one direction, and be rigid the other directions (e.g., perpendicular). Preferably, panel 18 is formed from the same material as the seats. Alternatively, panel 18 may be made from any number of decorative or durable materials (e.g., intended to take wear and tear, be washed, etc.), such as commercial grade seating fabric. Referring to FIGURES 6-10, panel 18 is preferably made from two sheets joined together (e.g., sewn, bonded, stapled, welded, fasteners, etc.) with main battens 20 and support battens 22 held in place (e.g., by seams 30, pleats, etc.). According to a particularly preferred embodiment, panel is made from a material commercially available from Xorel as XOREL fabric.

According to a preferred embodiment (shown in FIGURE 6), cargo system 16 includes three main battens 20 and a pair of support battens 22 evenly spaced between each set of adjacent main battens 20. According to alternative embodiments, cargo system 16 may have any number of main battens 20 and support battens 22 spaced in any of a variety of configurations. According to the invention, main battens 20 and support battens 22 are made from a flexible material (e.g., plastic, wood, metal, etc.). To deploy cargo system 16 in any of the use or deployed positions, main battens 20 are flexed or bent so that interface portions 23 (ends of main battens 20) are aligned with apertures 24. As the main battens 20 are allowed to return to its unstressed state, interface portions 23 engage (e.g., slide, etc.) apertures 24.

Cargo system 16 couples to vehicle 10 at any combination of one or more interfaces. According to the invention, interface portions 23 in main battens 20 engage apertures 24 (e.g., openings, holes, slots, grooves, recesses, etc.) in interior component which is a trim panels 26). Alternatively not according to the invention, the cargo system may engage apertures on any of a variety of interior components (e.g., seats, consoles, doors, etc). Depending on the attachment to the interior component, panel 18 may be used as a security cover for the cargo area, or portions of the cargo area.

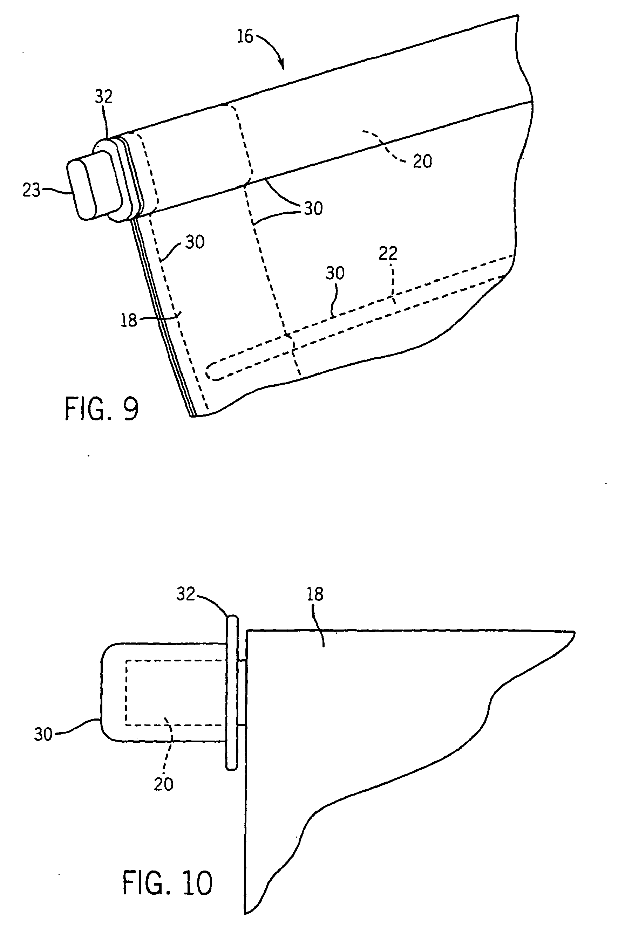

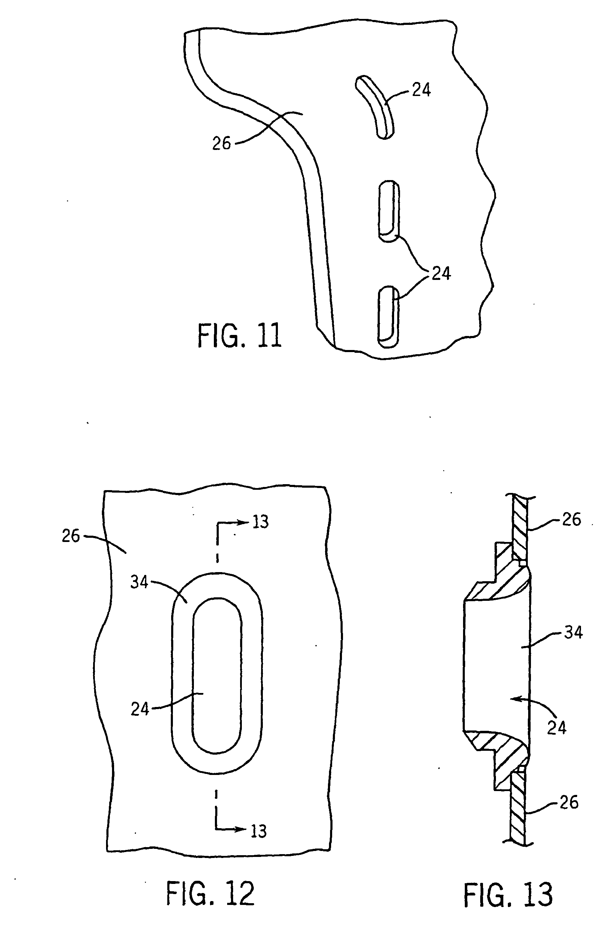

According to a preferred embodiment shown in FIGURE 9, interface portion 23 includes a projection (shown as a shoulder 32) to inhibit sliding or removal of main battens 20 from panel 18. According to a particularly preferred embodiment, interface portion is a plastic molded part that is mounted to ends of main battens 20 (e.g., joining, bonding, fastener, interference fit, etc.). As shown in FIGURES 9 and 12, interface portion 23 and aperture 24 are preferably rectangular. Alternatively, any of a variety of shapes and configurations may be used (e.g., a hook for a more positive engagement, circular, etc.). Also, support battens 22 are preferably captured between the sheets of panel 18 by seam 30.

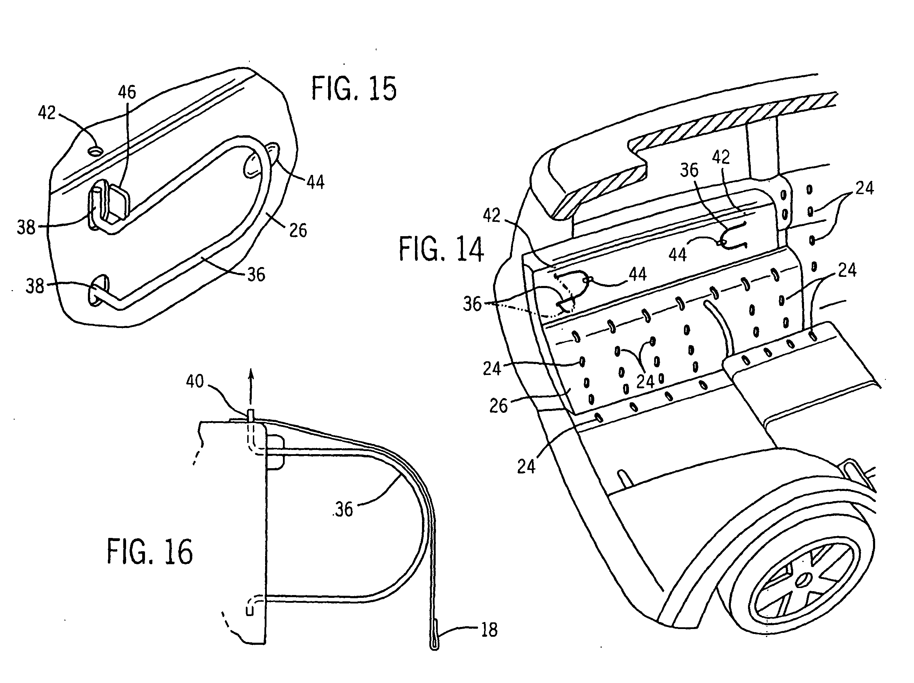

Referring to FIGURES 11 and 14, apertures 24 are located at a variety of locations along interior trim panels 26 (e.g., spaced apart height levels and fore-aft locations). As such, cargo system 16 may be arranged and configured (or reconfigured) in any number of positions. According to a preferred embodiment, aperture 24 is provided or defined by a bezel or slot member 34 mounted in openings in trim panel 26. Slot members 34 are coupled to trim panel 26 by any of a variety of methods (e.g., bonding, press-fit, adhesive, welding, fasteners, etc.).

Cargo system 16 is configured to be multi-functional in use. For example, FIGURE 3 is a fragmentary perspective view of the cargo system of FIGURES 1 and 2 in a first use or deployed position. In this position, cargo system 16 acts as a shelf so that additional items may be placed on it (i.e., provides a first or upper cargo space and a second or lower cargo space). Also, cargo system 16 acts as a security cover to obscure visual access to a portion of the cargo area 14.

According to an alternative embodiment shown in FIGURE 4, cargo system 16 is arranged to provide a plurality of cargo slots 28 (e.g., spaces, receptacles, etc.). The three main battens 20 are coupled along a top portion of interior trim panel 26 so that panel 18 hangs (e.g., droops, sags, etc.) down to form the cargo slots 28. Interface portions 23 of main battens 20 may also engage other apertures 24 to provide different sizes and orientations of cargo slots 28 (e.g., rather than engaging adjacent and sequential apertures 24, main battens may engage apertures 24 at different heights, longitudinal spacing, etc.). Alternatively, as shown in FIGURE 5, cargo system 16 is arranged to provide a plurality of cargo spaces (e.g., slots, receptacles, etc.). In yet another alternative embodiment, cargo system 16 is arranged to provide another configuration for stowing cargo.

To use or deploy cargo system 16 in any of the use or deployed positions, main battens 20 are flexed or bent so that interface portions 23 (ends of main battens 20) may be aligned with apertures 24. As the main battens 20 are allowed to return to its unstressed state, interface portions 23 engage (e.g., slide, etc.) apertures 24.

Referring again to FIGURE 2, to store or stow cargo system 16, main battens 20 are flexed or bent so that interface portions 23 may be removed from engagement with apertures 24 (interior trim panels 26). According to an exemplary embodiment, interior trim panels 26 include a slot 33 configured to receive one or more interface portions 23. As such, panel 18 may be hung from, for example, an upper portion of interior trim panel 26 by a main batten 20 disposed along an outer edge of cargo system 16, or between edges of cargo system 16 (e.g., folded in half so that the middle main batten 20 may be used to hang cargo system 16), or the like. According to other alternative embodiments, cargo system 16 may be rolled up, folded, bunched, or the like and place at any of a variety of locations in vehicle 10, passenger compartment 12, or cargo area 14.

According to an exemplary embodiment shown in FIGURES 14-16, a storage support or frame 36 is used to store or stow cargo system 16, and/or to provide additional configurations for arranging cargo system 16. FIGURE 14 shows frame 36 in a stowed position. In the stowed position, frame 36 preferably is located in a groove or recess in trim panel 26 so as to not extend beyond (or extend minimally) the surface of trim panel 26. FIGURE 16 shows frame 36 in a deployed position. According to a preferred embodiment, ends of frame 36 engage openings 38 in trim panel 26, and orientated so that when frame 36 is pivoted into the deployed position, one of its end 40 (e.g., post, nub, detent, etc.) becomes aligned with and engages an aperture 42 in trim panel 26. A biasing force generated by frame 36 generally being in tension (i.e., compression), such that ends of frame 36 are biased away from each other. To move frame 36 from the stowed position to the deployed position, the user grips frame 36 by looping one or more fingers around frame 36 at a recess 44, and rotates frame to a position generally perpendicular to trim panel 26. End 40 slides along an interior surface of trim panel 26 until end 40 is aligned or registered with aperture 42. The biasing force in frame 36 forces end 40 through aperture 42 (e.g., pops or snap fit). Frame 36 bears against a projection 46. Slot is located adjacent projection 46 is orientated to guide frame 36 generally upward as end 40 engages aperture 42. According to an alternative embodiment, frame 36 is coupled to trim panel 26 by a pair of hinges.

In the deployed position, panel 18 may wrap around frame 36 and couple to end of frame 36 or to interior trim panel 26. As such, another storage space is formed by frame 36 and panel 18. Alternatively, panel 18 may be allowed to hang from frame 36 (e.g., free or couple below). Also, when not being used (deployed), cargo system 16 may be rolled up, folded, or the like and place beneath seats, in cargo storage areas or bins, in cargo area 14, or the like.

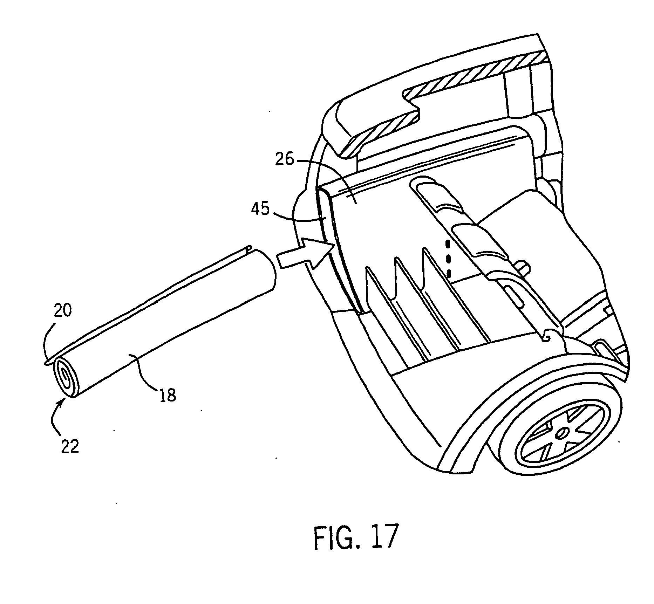

FIGURE 17 is a perspective view of the panel rolled up and being stowed in a space 45 (e.g., cavity, storage space, etc.) defined by the trim panel. According to alternative embodiments, panel 18 may be folded for stowing. Also, the space for stowing or storing panel 18 may be at any of a variety of locations in or on the vehicle. Use of a space in the cargo area is shown for example only.

It is also important to note that the construction and arrangement of the elements of the cargo system as shown in the preferred and other exemplary embodiments is illustrative only. Although only a few embodiments of the preserit inventions have been described in detail in this disclosure, those skilled in the art who review this disclosure will readily appreciate that many modifications are possible (e.g., variations in sizes, dimensions, structures, shapes and proportions of the various elements, values of parameters, mounting arrangements, use of materials, colors, orientations, etc.) without materially departing from the novel teachings and advantages of the subject matter recited. For example, the panel may be used as a security cover for the cargo area, or portions of the cargo area. Also, elements shown as integrally formed may be constructed of multiple parts or elements show as multiple parts may be integrally formed, the operation of the interfaces (e.g. clamps, etc.) may be reversed or otherwise varied, the length or width of the structures and/or members or connector or other elements of the system may be varied, the nature or number of adjustment positions provided between the elements may be varied (e.g. by variations in the number of engagement slots or size of the engagement slots or type of engagement). It should be noted that the elements and/or assemblies of the system may be constructed from any of a wide variety of materials that provide sufficient strength or durability, in any of a wide variety of colors, textures and combinations. It should also be noted that the cargo system may be used in association with a variety of vehicles (e.g., sedans, SUVs, vans, minivans, trucks, boats, or alternatively other, cargo areas or any of a wide variety of other applications.

## Claims

1. A collapsible cargo system for a vehicle comprising:
a flexible panel (18);
at least one trim panel (26) coupleable to the vehicle;
a plurality of generally parallel, spaced apart support members coupled to the flexible panel (18) and configured to releasably couple the flexible panel (18) to the at least one trim panel (26) the support members including two or more main battens (20) and at least one support batten (22), the main battens (20) including an interface portion (23) configured to selectively engage apertures (24) on the at least one trim panel (26),
wherein the flexible panel (18) is deployable in a plurality of use positions wherein the support members are generally cross-car in the vehicle and the interface portion (23) is engaged with one of the apertures (24) on the at least one trim panel (26), and deployable in a stowed position,
**characterised in that** the main battens (20) engage the at least one trim panel (26) by bending of the main battens (20), aligning the interface portion (23) with the aperture (24), and releasing the main batten (20) towards its relaxed state.

2. The cargo system of Claim 1 wherein each aperture (24) is a slot defined by a bezel (34).

3. The cargo system of Claim 1 wherein the plurality of use positions comprise a first use position, a second use position and a third use position wherein the support members are generally cross-car in the vehicle and the interface portion (23) is engaged with the at least one trim panel (26), and deployable in a stowed position.

4. The cargo system of Claim 1 wherein the flexible panel (18) is collapsible for storage when in the stowed position.

5. The cargo system of Claim 1 further comprising a frame (36) configured to store cargo system (16) and/or to provide additional configurations for arranging the cargo system (16), the frame being rotatably coupled to the at least one trim panel (26) so as to be moveable between a stored position and a deployed position.

6. The cargo system of Claim 5 wherein the frame (36) is coupled to the at least one trim panel (26) by engagement of a detent on the frame (36) and apertures (42) on the at least one trim panel (26), wherein the frame (36) is biased so that the detent engages apertures (42) in the at least one trim panel (26).

## Patentansprüche

1. Zusammenlegbares Gepäcksystem für ein Fahrzeug, umfassend:
ein flexibles Paneel (18);
wenigstens ein Verkleidungspaneel (26), das mit dem Fahrzeug verbunden werden kann;
mehrere allgemein parallele, voneinander beabstandete Stützelemente, die mit dem flexiblen Paneel (18) verbunden sind und dafür konfiguriert sind, das flexible Paneel (18) lösbar mit dem wenigstens einen Verkleidungspaneel (26) zu verbinden, wobei die Stützelemente zwei oder mehr Hauptleisten (20) und wenigstens eine Stützleiste (22) enthalten, wobei die Hauptleisten (20) einen Schnittstellenabschnitt (23) enthalten, der dafür konfiguriert ist, Öffnungen (24) in dem wenigstens einen Verkleidungspaneel (26) wahlweise in Eingriff zu nehmen,
wobei das flexible Paneel (18) in mehrere Gebrauchspositionen gebracht werden kann, wobei die Stützelemente allgemein quer zur Fahrtrichtung in dem Fahrzeug angeordnet sind und der Schnittstellenabschnitt (23) mit einer der Öffnungen (24) in dem wenigstens einen Verkleidungspaneel (26) in Eingriff steht, und in eine verstaute Position gebracht werden kann;
**dadurch gekennzeichnet, dass** die Hauptleisten (20) das wenigstens eine Verkleidungspaneel (26) in Eingriff nehmen, indem die Hauptleisten (20) gebogen werden, der Schnittstellenabschnitt (23) auf die Öffnung (24) ausgerichtet wird und die Hauptleiste (20) in Richtung ihres entspannten Zustands losgelassen wird.

2. Gepäcksystem nach Anspruch 1, wobei jede Öffnung (24) ein Schlitz ist, der durch eine Anschrägungsfläche (34) definiert wird.

3. Gepäcksystem nach Anspruch 1, wobei die mehreren Gebrauchspositionen eine erste Gebrauchsposition, eine zweite Gebrauchsposition und eine dritte Gebrauchsposition umfassen, wobei die Stützelemente allgemein quer zur Fahrtrichtung in dem Fahrzeug angeordnet sind und der Schnittstellenabschnitt (23) mit dem wenigstens einen Verkleidungspaneel (26) in Eingriff steht, und in eine verstaute Position gebracht werden kann.

4. Gepäcksystem nach Anspruch 1, wobei das flexible Paneel (18) zur Aufbewahrung zusammengelegt werden kann, wenn es sich in der verstauten Position befindet.

5. Gepäcksystem nach Anspruch 1, das des Weiteren einen Rahmen (36) umfasst, der dafür konfiguriert ist, das Gepäcksystem (16) aufzubewahren und/oder zusätzliche Konfigurationen zum Anordnen des Gepäcksystems (16) zu ermöglichen, wobei der Rahmen drehbar mit dem wenigstens einen Verkleidungspaneel (26) verbunden ist, so dass er zwischen einer verstauten Position und einer Gebrauchsposition bewegt werden kann.

6. Gepäcksystem nach Anspruch 5, wobei der Rahmen (36) mit dem wenigstens einen Verkleidungspaneel (26) durch Eingriffnahme einer Arretierung an dem Rahmen (36) und Öffnungen (42) in dem wenigstens einen Verkleidungspaneel (26) verbunden wird, wobei der Rahmen (36) so vorgespannt ist, dass die Arretierung die Öffnungen (42) in dem wenigstens einen Verkleidungspaneel (26) in Eingriff nimmt.

## Revendications

1. Système de chargement rabattable pour un véhicule, comprenant :
un panneau souple (18) ;
au moins un panneau de garnissage (26), pouvant être couplé au véhicule ;
une pluralité d'éléments de support espacés, généralement parallèles, couplés au panneau souple (18) et configurés pour coupler de façon détachable le panneau souple (18) audit au moins un panneau de garnissage (26), les éléments de support incluant au moins deux lattes principales (20), et au moins une latte de support (22), les lattes principales (20) incluant une partie d'interface (23) configurée pour s'engager sélectivement avec des ouvertures (24) ménagées sur ledit au moins un panneau de garnissage (26),
dans lequel le panneau souple (18) peut être déployé dans une pluralité de positions d'utilisation,
dans lesquelles les éléments de support sont généralement transversaux dans le véhicule, et la partie d'interface (23) est engagée avec l'une des ouvertures (24) sur ledit au moins un panneau de garnissage (26), et peut être déployé dans une position rétractée,
**caractérisé en ce que** les lattes principales (20) s'engagent avec ledit au moins un panneau de garnissage (26) en pliant les lattes principales (20), en alignant la partie d'interface (23) avec l'ouverture (24), et en relâchant la latte principale (20) pour la laisser revenir vers son état détendu.

2. Système de chargement selon la revendication 1, dans lequel chaque ouverture (24) est une fente définie par un chanfrein (34).

3. Système de chargement selon la revendication 1, dans lequel la pluralité de positions d'utilisation comprend une première position d'utilisation, une deuxième position d'utilisation, et une troisième position d'utilisation, dans lesquelles les éléments de support sont généralement transversaux dans le véhicule et la partie d'interface (23) est engagée avec ledit au moins un panneau de garnissage (26), et peut être déployée dans une position rétractée.

4. Système de chargement selon la revendication 1, dans lequel le panneau souple (18) est repliable pour son stockage lorsqu'il se trouve dans la position rétractée.

5. Système de chargement selon la revendication 1, comprenant en outre un cadre (36) configuré pour stocker le système de chargement (16) et/ou pour fournir les configurations supplémentaires afin d'agencer le système de chargement (16), ledit cadre étant couplé en pouvant tourner audit au moins un panneau de garnissage (26), de manière à être mobile entre une position rétractée et une position déployée.

6. Système de chargement selon la revendication 5, dans lequel le cadre (36) est couplé audit au moins un panneau de garnissage (26), par engagement d'un doigt d'arrêt prévu sur le cadre (36) avec des ouvertures (42) ménagées sur ledit au moins un panneau de garnissage (26), dans lequel le cadre (36) est sollicité de telle sorte que le doigt d'arrêt s'engage avec les ouvertures (42) ménagées dans ledit au moins un panneau de garnissage (26).
